# EUROPEAN PATENT SPECIFICATION

(11) **EP 2 193 906 B1**
(45) Date of publication and mention of the grant of the patent: **08.02.2017**
(21) Application number: 08382071.2
(22) Date of filing: 03.12.2008
(51) Int. Cl.: B29C 45/14, B60J 3/02

(54) **Method for manufacturing a connector axis for vehicle sunshield and connector axis thus obtained**
Verfahren zur Herstellung einer Verbindungsachse für Fahrzeugsonnenblenden und dadurch erhaltene Verbindungsachse
Procédé de fabrication d'un axe de connecteur pour pare-soleil de véhicule et axe de connecteur ainsi obtenu

(43) Date of publication of application: 09.06.2010
(73) Proprietor: GJM, S.A., 08430 La Roca del Valles (Barcelona) (ES)
(72) Inventor: Jové Albós, Josep, 08430 La Roca Del Vallès (ES)
(74) Representative: Manresa Medina, José Manuel

(56) References cited:
- EP-A- 0 399 368
- US-A- 5 143 678
- US-A1- 2002 063 437

## Description

### BACKGROUND OF THE INVENTION

Spanish Patent ES2158818, "Procedimiento de inyección de pasacables y elemento centrador/separador para utilizarlo con dicho procedimiento", of 1999, in the name of LEAR AUTOMOTIVE (EEDS) SPAIN, S.L., which refers to a procedure in which a centring/separating element is applied to the wiring loom before the injection operation in order to obtain a wiring conduit with minimum thickness and uniform injected material distribution. The centring/separating element comprises two half-rings, between which is a series of studs, which protrude outwards to retain the centring/separating element in place with respect to the wiring loom and flexible wings that apply pressure to the wires when the half-rings are mutually closed over them.

United States Patent US 2008/0187614, "Plastic positioning pin for overmolded product" from 2007, which refers to an over-moulded electronic device that includes a pre-mould part with protruding studs in contact with a cavity inside the mould. Arranged in this way, the studs are sealed inside the mould, which guarantees correct operation of the electronic device.

EP 0 399 368 A1 describes a procedure for the manufacture of a connector axis for a vehicle sunshield comprising at least two electric wires and terminals at the end of the wires, comprising the following manufacturing stages:
- a first stage in which the wires are arranged on a support so that both wires are separated on the support;
- a second stage in which the support with the wires is positioned inside a mould; and
- a third stage in which the support with the wires is overmoulded to obtain the connector axis.

### DISCLOSURE OF THE INVENTION

This invention, as defined in independent claims 1 and 6, is a great advance in the car industry, specifically in the area where the vehicle sunshield electronic connection is produced.

It is specifically intended for sunshields of vehicles incorporating lighting in the mirror or other systems that require an electric or electronic connection.

Said connections require outer protection because the use of the sunshield could cause the wires to twist.

A moulding system is currently being employed in which metal sheets are initially available that are over-moulded and, once over-moulded, the electric wires can be connected or electric wires protected inside a metal pipe or without one.

The main disadvantage is that the injection cycles are drastically reduced due to the need to have the sheets in the housings to prevent subsequent complications.

The inventor has also seen that this traditional moulding procedure for the sheets also has the disadvantage that many have to be rejected in quality assurance controls because the sheets come out of the sides during injection.

If wires are used instead of sheets, they sometime touch and when the covering is melted as a result of the high temperatures an electric short-circuit occurs.

With this invention, apart from resolving the previously described problems, the inventor reduces the moulding times by approximately 50%, makes the final product mechanically stronger because the housings or moulder venting wires are removed and also provides greater dimensional stability to the product, above all, in critical areas, such as curves.

This is achieved because the wires are laid out on a support that separates them to prevent them from touching and then the entire support and wire assembly is moulded.

The final product is very strong because of the support and moulding, is safe since the wires are always separated and, at the same time, there is no danger of badly placed wires resulting in poor moulding that leaves part of the wires without any covering.

According to the present invention, a procedure for the manufacture of a connector axis for a vehicle sunshield as defined in claim 1 and a connector axis as defined in claim 6 are proposed.

### BRIEF DESCRIPTION OF THE DRAWINGS

In order to facilitate the description, this report is accompanied by five sheets of drawings on which a practical exemplary embodiment is represented, which is cited as an example that does not limit the scope of this invention.
- Figure 1 is an elevation view of the support with the installed wires,
- Figure 2 is an elevation view of the supports for the left and right sunshields without the electric wires,
- Figure 3 is a lower view of the supports for the left and right sunshields without the electric wires,
- Figure 4 is a cut along section IV-IV of the support in Figure 1,
- Figure 5 is a perspective view of a support formed by segments.

### SPECIFIC EXEMPLARY EMBODIMENT OF THE REQUESTED PATENT

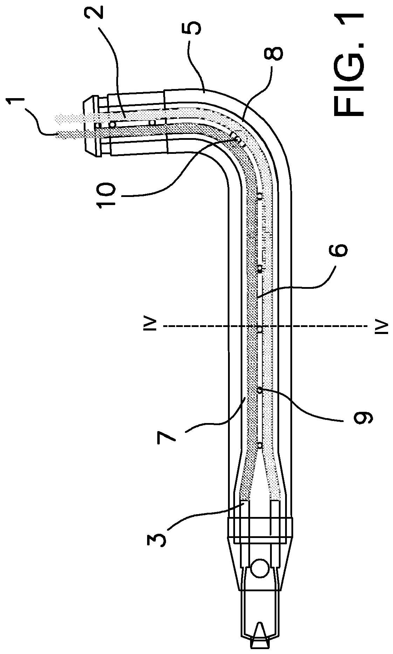

Support 5 is drawn in Figure 1, with electric wires 1, 2, a terminal 3, a separating partition 6, slots 7, 8 and stops 9, 10.

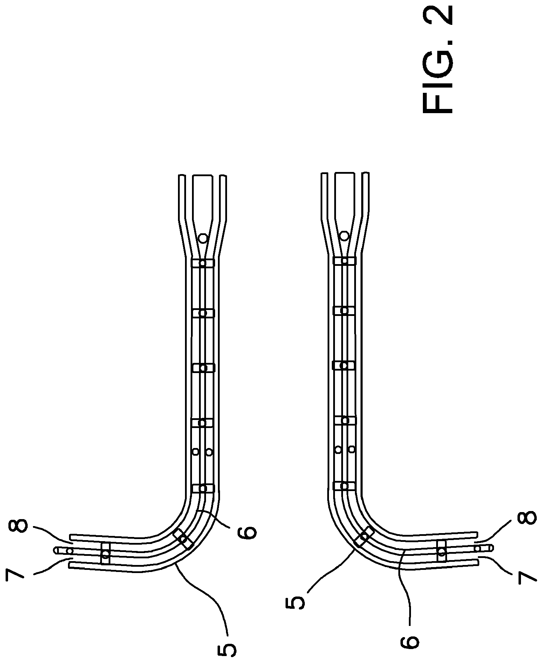

Figure 2 represents an upper view of two connector axis without electric wires, the lower right side and the upper left side. Each illustrates support 5, two slots 7, 8 and the separating partition 6.

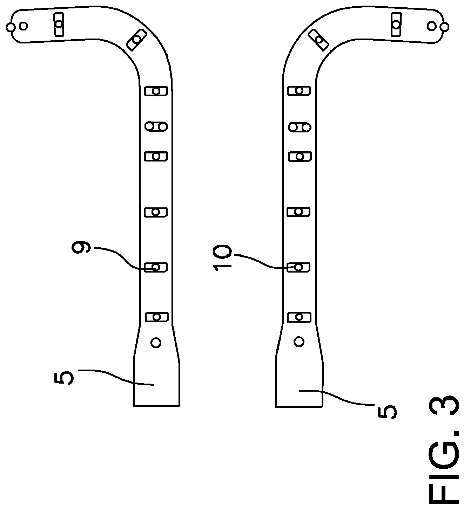

Figure 3 illustrates the lower view of the two connector axis without electric wires, the lower right side and the upper left side. Each illustrates support 5 and stops 9, 10.

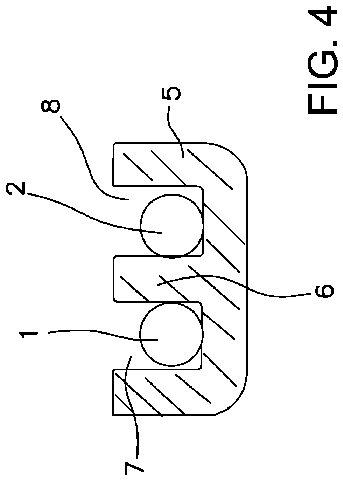

Figure 4 shows support 5, with wires 1, 2 housed in their respective slots 7, 8 and separated by separating partition 6.

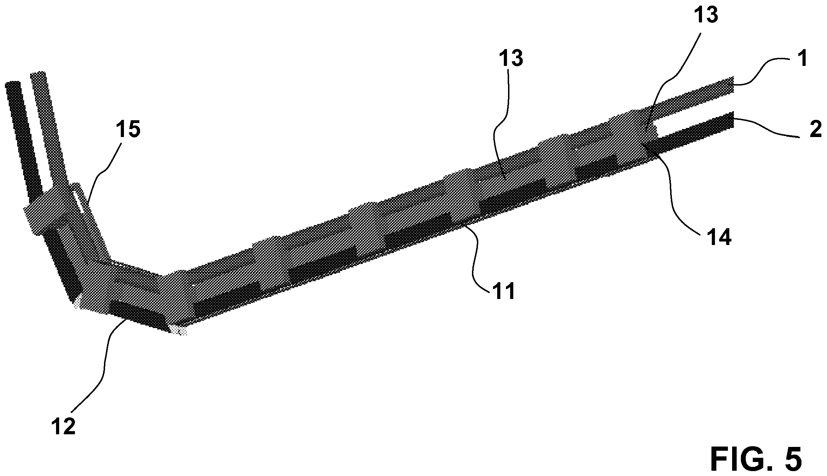

Finally, Figure 5 shows another exemplary embodiment of support 5 formed by segments 11, 12, with separating partition 13, wires 1, 2 and securing means 14, 15.

Thus, the procedure for the manufacture of a connector axis for a vehicle sunshield comprises at least two electric wires 1, 2 and terminals 3 at the ends of the referred wires, connected to a lamp and power supply respectively.

The manufacturing system comprises the following stages:
A first stage in which mentioned wires 1, 2 are arranged on support 5 so that both wires are separated inside support 5.
A second stage in which, mentioned support 5, is positioned with wires 1, 2 inside a mould.
Lastly, a third stage in which the support and wires of the first stage are moulded, with wires 1, 2 separated and protected by support 5.

Basically, there are two types of supports, one as shown in Figures 1 to 4, in which support 5 is formed by a channel comprising separating partition 6 defining two slots 7, 8 for the location of respective wires 1, 2 in a separated, independent fashion; and another, as in Figure 5 comprising a support formed by a succession of segments, at least two segments 11, 12 comprising a separating partition 13, with securing means over wires 1, 2.

A priori, with support 5 of Figures 1 to 4, it would be possible to incorporate more wires and more separating partitions. The support in Figure 5, on the other hand, would not allow this, although its segment arrangement makes it adaptable to any configuration with curves that might be required.

In the third stage for over-moulding, support 5 may be made of the same material as that employed in the over-moulding operation, which would increase durability and connector axis strength. It also avoids possible points at which differences in material or colour appear and hence, the final product quality is superior.

Separating partition 6, 13 of support 5 can also comprises a reinforcing metal core that would significantly reinforce the support.

In order to facilitate the positioning inside the mould, the lower part of support 5 is designed with stops or needles 9, 10 that allow the over-moulding to pass underneath support 5. Similarly, said stops or needles 9, 10 maintain support 5 at the necessary height and width so that support 5 is centred during the over-moulding process.

In this fashion, the final product consists of a connector axis for a vehicle sunshield in accordance with the previous procedure, of the type comprising at least two electric wires 1, 2 and terminals 3 at the ends of the referred wires in order to connect, as previously stated, a light source, such as a lighted mirror and power supply means.

Said connector axis comprises support 5 where mentioned wires 1, 2 are housed, with said wires separated inside referred support 5, and with over-moulding over support 5 and wires 1, 2.

One of supports 5 is formed by a channel comprising at least one separating partition 6 defining two slots 7, 8 for the location of separate independent respective wires 1, 2 (Figs 1-4).

The other possible support 5 (Fig. 5) is formed by at least two segments 11, 12 comprising separating partition 13, with securing means 14, 15 over electric wires 1, 2.

Said securing means 14, 15 prevent the wires 1, 2 from separating from support 5 during the over-moulding process.

In a particular exemplary embodiment, as previously indicated, support 5 is of the same material as that used for over-moulding, which increases support 5, durability and strength.

In order to reinforce support 5 and said separating partition 6, 13, even more, said partition can comprise a metal reinforcement core (not illustrated).

As indicated in the procedure, support 5 comprises stops or needles 9, 10 in its upper and lower parts to facilitate the centering of said support 5.

This invention describes a new procedure for manufacturing a connector axis for a vehicle sunshield and the connector axis obtained. The examples described here do not limit this invention and it can have various applications and/or adaptations, all within the scope of the following claims.

## Claims

1. A procedure for the manufacture of a connector axis for a vehicle sunshield comprising at least two electric wires (1, 2) and terminals (3) at the ends of the referred wires, comprising the following manufacturing stages:
• a first stage in which mentioned wires (1, 2) are arranged on a support (5) so that both wires are separated on referred support (5).
• a second stage in which mentioned support (5) with wires (1, 2) is centred inside a mould by means of stops or needles (9, 10), which the support (5) comprises in its upper and lower parts, and
• a third stage in which the support and wires assembly is moulded.

2. Procedure in accordance with claim 1 **characterised in that** the support (5) is formed by a channel comprising at least one separating partition (6), defining two slots (7, 8) for the location of respective separated independent wires (1, 2).

3. Procedure in accordance with claim 1 **characterised in that** the support (5) is formed by at least two segments (11, 12) comprising a separating partition (13), with securing means over the wires (1, 2).

4. Procedure in accordance with claim 1 **characterised in that** the support (5) is of the same material as that used in over-moulding.

5. Procedure in accordance with claim 2 or 3 **characterised in that** the separating partition (6, 13) of the support (5) has a metal reinforcement core.

6. Connector axis for a vehicle sunshield in accordance with the previous procedure, comprising at least two electric wires (1, 2) and terminals (3) at the ends of the referred wires and comprising a support (5) where mentioned wires (1, 2) are housed and which is designed with stops or needles (9, 10) in its upper and lower parts, with said wires separated inside referred support (5) and with over-moulding over the support (5) and wires (1, 2).

7. Connector axis in accordance with claim 6 **characterised in that** the support (5) is formed by a channel comprising at least one separating partition (6) defining two slots (7, 8) for the location of separate independent respective wires (1, 2).

8. Connector axis in accordance with claim 6 **characterised in that** the support (5) is formed by at least two segments (11, 12) comprising a separating partition (13), with securing means (14, 15) over the electric wires (1, 2).

9. Connector axis in accordance with claim 6 **characterised in that** the support (5) is of the same material as that used in the over-moulding process.

10. Connector axis in accordance with claim 7 or 8 **characterised in that** the separating partition (6, 13) of the support (5) comprises a metal reinforcement core.

## Patentansprüche

1. Verfahren zur Herstellung einer Verbindungsachse für eine Fahrzeugsonnenblende umfassend mindestens zwei Stromleiter (1, 2) und Anschlüsse (3) an den Enden dieser Leiter, umfassend die folgenden Herstellungsschritte:
• einen ersten Schritt, in dem die Leiter (1, 2) auf einer Halterung (5) so angeordnet werden, dass beide Leiter auf der Halterung (5) getrennt sind,
• einen zweiten Schritt, in dem die Halterung (5) mit Leitern (1, 2) in einer Form mittels von Anschlägen oder Nadeln (9, 10), die die Halterung (5) in ihrem oberen und unteren Teil umfasst, zentriert ist, und
• einen dritten Schritt, in dem die Halterungs- und Leitereinheit geformt wird.

2. Verfahren nach Anspruch 1, **dadurch gekennzeichnet, dass** die Halterung (5) durch einen Kanal geformt ist, umfassend mindestens eine trennende Unterteilung (6), die zwei Schlitze (7, 8) für die Aufnahme der jeweils getrennten unabhängigen Leiter (1, 2) definiert.

3. Verfahren nach Anspruch 1, **dadurch gekennzeichnet, dass** die Halterung (5) durch mindestens zwei Segmente (11, 12) gebildet wird, umfassend eine trennende Unterteilung (13) mit Befestigungsmitteln über den Leitern (1, 2).

4. Verfahren nach Anspruch 1, **dadurch gekennzeichnet, dass** die Halterung (5) aus demselben Material wie das verwendete Material beim Überformen ist.

5. Verfahren nach Anspruch 2 oder 3, **dadurch gekennzeichnet, dass** die trennende Unterteilung (6, 13) der Halterung (5) einen Metall-Verstärkungskern hat.

6. Verbindungsachse für eine Fahrzeugsonnenblende gemäß dem vorherigen Verfahren, umfassend mindestens zwei Stromleiter (1, 2) und Anschlüsse (3) an den Enden dieser Leiter und umfassend eine Halterung (5), wo die Leiter (1, 2) aufgenommen werden, und die mit Anschlägen oder Nadeln (9, 10) in ihrem oberen und unteren Teil konstruiert ist, wobei die Leiter in der Halterung (5) getrennt sind und mit Überformen über die Halterung (5) und Leiter (1, 2).

7. Verbindungsachse nach Anspruch 6, **dadurch gekennzeichnet, dass** die Halterung (5) durch einen Kanal geformt ist, umfassend mindestens eine trennende Unterteilung (6), die zwei Schlitze (7, 8) für die Aufnahme der getrennten unabhängigen jeweiligen Leiter (1, 2) definiert.

8. Verbindungsachse nach Anspruch 6, **dadurch gekennzeichnet, dass** die Halterung (5) durch mindestens zwei Segmente (11, 12) gebildet wird, umfassend eine trennende Unterteilung (13) mit Befestigungsmitteln (14, 15) über den Stromleitern (1, 2).

9. Verbindungsachse nach Anspruch 6, **dadurch gekennzeichnet, dass** die Halterung (5) aus demselben Material wie das verwendete Material im Überformungsprozess ist.

10. Verfahren nach Anspruch 7 oder 8, **dadurch gekennzeichnet, dass** die trennende Unterteilung (6, 13) der Halterung (5) einen Metall-Verstärkungskern umfasst.

## Revendications

1. Procédure pour la fabrication d'un axe de raccordement pour pare-soleil de véhicule, comprenant au moins deux câbles électriques (1, 2) et des terminaux (3) aux extrémités de ces câbles, comprenant les étapes de fabrication suivantes:
• une première étape pendant laquelle lesdits câbles électriques (1, 2) sont disposés sur un support (5) de telle manière que les deux câbles soient séparés sur ledit support (5).
• une deuxième étape pendant laquelle ledit support (5) avec les câbles (1, 2) est centré à l'intérieur d'un moule à l'aide de butées ou d'aiguilles (9, 10) que le support (5) comprend dans ses parties supérieure et inférieure, et
• une troisième étape pendant laquelle l'ensemble support et câbles est moulé.

2. Procédure conformément à la revendication 1 **caractérisée en ce que** le support (5) est formé d'un rail comprenant au moins une division séparatrice (6), définissant deux rainures (7, 8) pour le logement de câbles indépendants séparés (1, 2).

3. Procédure conformément à la revendication 1 **caractérisée en ce que** le support (5) est formé d'au moins deux segments (11, 12) comprenant une division séparatrice (13), avec un moyen de fixation sur les câbles (1, 2).

4. Procédure conformément à la revendication 1 **caractérisée en ce que** le matériau du support (5) est le même que celui utilisé dans le surmoulage.

5. Procédure conformément à la revendication 2 ou 3, **caractérisée en ce que** la division séparatrice (6, 13) du support (5) a un noyau de renfort métallique.

6. Axe de raccordement pour pare-soleil de véhicule conformément à la procédure précédente, comprenant au moins deux câbles électriques (1, 2) et des terminaux (3) aux extrémités de ces câbles et comprenant un support (5) où lesdits câbles (1, 2) sont logés et qui est conçu avec des butées ou des aiguilles (9, 10) dans ses parties supérieure et inférieure, lesdits câbles étant séparés à l'intérieur dudit support (5) et avec un surmoulage sur le support (5) et les câbles (1, 2).

7. Axe de raccordement conformément à la revendication 6, **caractérisé en ce que** le support (5) est composé d'un rail comprenant au moins une division séparatrice (6) définissant deux rainures (7, 8) pour le logement de câbles indépendants séparés (1, 2).

8. Axe de raccordement conformément à la revendication 6, **caractérisé en ce que** le support (5) est composé d'au moins deux segments (11, 12) comprenant une division séparatrice (13), avec des moyens de fixation (14, 15) sur les câbles électriques (1, 2).

9. Axe de raccordement conformément à la revendication 6, **caractérisé en ce que** le support (5) est composé du même matériau que celui utilisé dans le processus de surmoulage.

10. Axe de raccordement conformément à la revendication 7 ou 8, **caractérisé en ce que** la division séparatrice (6, 13) du support (5) comprend un noyau de renfort métallique.
